# EUROPÄISCHE PATENTSCHRIFT

(11) **EP 3 841 842 B1**
(45) Veröffentlichungstag und Bekanntmachung des Hinweises auf die Patenterteilung: **20.05.2026**
(21) Anmeldenummer: 19745613.0
(22) Anmeldetag: 29.07.2019
(51) Int. Cl.: H05B 3/26, G03B 11/04, G03B 17/55, H05B 3/46, G01S 13/93, H01Q 1/42, H05B 3/84, G02B 7/02, G01S 7/40

(54) **TEMPERATURREGULIERUNGSELEMENT UND SENSORANORDNUNG**
TEMPERATURE CONTROL ELEMENT, AND SENSOR ARRANGEMENT
ÉLÉMENT DE RÉGULATION DE TEMPÉRATURE ET DISPOSITIF DE CAPTEUR

(30) Priorität: 21.08.2018 DE 102018214108
(43) Veröffentlichungstag der Anmeldung: 30.06.2021
(73) Patentinhaber: AUMOVIO Autonomous Mobility Germany GmbH, 85057 Ingolstadt (DE)
(72) Erfinder: GRÜNWALD, Martin, 90411 Nürnberg (DE); PFEIFFER, Franz, 90411 Nürnberg (DE)
(74) Vertreter: Aumovio Corporation
(86) Internationale Anmeldenummer: PCT/EP2019/070374
(87) Internationale Veröffentlichungsnummer: WO 2020/038687

(56) Entgegenhaltungen:
- DE-A1- 102010 052 472
- DE-A1- 102015 218 876
- DE-A1- 102017 201 460
- DE-A1- 102017 209 412
- US-A1- 2009 211 355

## Beschreibung

Die Erfindung betrifft ein Temperaturregulierungselement für einen Sensor sowie eine Sensoranordnung.

Die Bauteilkomplexität nimmt immer mehr zu. Bauteile sollen einerseits immer leistungsstärker werden. Andererseits ist man aber auch bestrebt, die Größe der Bauteile zu verringern bzw. möglichst viele verschiedene Funktionen in einem Bauteil zu integrieren. Dies führt dazu, dass immer mehr Teile bzw. Elemente auf kleinsten Bauraum verbaut werden müssen, was häufig mit einer höheren Temperaturentwicklung bzw. Temperaturveränderung einhergeht, da nicht genügend Raum für die Abgabe der Wärme vorhanden ist. Damit die Bauteile jedoch alle richtig funktionieren können, müssen bauteilspezifische Temperaturbereiche eingehalten werden. Dies wird insbesondere durch das Integrieren von Elementen zur Wärmeabfuhr bzw. zur Wärmezufuhr gewährleistet.

Aus dem Stand der Technik ist es bekannt Sensoren zur Umfelderfassung mit Heizelementen zu versehen. So kann beispielsweise ein Objektivtubus mit einer Heizfolie versehen sein. Die Folie wird dafür bevorzugt auf den Kubus aufgeklebt. Nachteilig hierbei ist jedoch, dass sich die Heizfolie nur sehr schwer an die Kontur des Bauteils anpassen lässt, wodurch eine nur unbefriedigende Verbindung bzw. ein unbefriedigender Kontakt zwischen den Elementen geschaffen wird. Dies führt zu einer nicht ausreichenden und keiner gesicherten Temperaturregulierung des Sensors. Zudem ist auch die Montage und elektrische Kontaktierung recht schwierig und zeitaufwendig.

Ausgehend hiervon ist es nun Aufgabe der Erfindung, eine Lösung anzugeben, wie eine sichere Temperaturregulierung von Bauteilen, insbesondere von Sensoren zur Umfelderfassung, insbesondere mit möglichst geringem konstruktiven Aufwand, geschaffen werden kann.

Beispielsweise beschreibt die DE 10 2015 218 876 A1 ein elektrisch beheizbares Radom für einen Radarsensor eines Kraftfahrzeugs. Das Radom weist ein flächiges Kunststoffelement auf, wobei das Kunststoffelement aus einer Heizfolie mit hinterspritztem thermoplastischen Kunststoff besteht, und wobei die Heizfolie eine metallische Struktur aufweist. Zudem umfasst das Radom einen Stecker, welcher dem elektrischen Anschließen des beheizbaren Radoms dient. Die Folie ist dabei als eine metallisierte Kunststofflaminatfolie ausgebildet und weist Polyimid, Polycarbonat oder Polyethylennaphthalat auf. Die metallische Struktur besteht aus Kupfer oder Aluminium und ist auf die Folie aufgedampft.

US 2009/211355 A1 (RENNINGER ERHARD [DE] ET AL) 27. August 2009 (2009-08-27) offenbart einen Heißfilm-Luftmassensensor zur Messung eines Luftmassenstroms in einem Ansaugtrakt einer Brennkraftmaschine.

In der DE 10 2017 201 460 A1 ist eine Kamera für ein Kraftfahrzeug beschrieben mit einem Objektivteil und einem darin angeordneten Objektiv sowie mit einem mit dem Objektivteil gekoppeltem Gehäuse. Das Gehäuse besteht aus einer Metallverbindung, insbesondere aus einer Verbindung aus einem Harz und einem Metalloxid, und umfasst ein als ein Hochfrequenz-Heizelement ausgebildetes Heizelement, das aus einem leitfähigen Material wie Kupfer, Nickel oder Gold gebildet ist und das in einer Heizelementnut, welche an der Oberfläche des Gehäuses vertieft ausgebildet ist, angeordnet ist. Dabei ist das Heizelement mittels eines Laser-Direktstrukturierungs-(LDS)Herstellungsverfahrens hergestellt. Zur Erzeugung von Wärme wird eine Radiofrequenz-Leistung mit einer hohen Frequenz (z.B. 100 kHz) an eine Heizelementelektrode gelegt, so dass die Wärme nicht direkt auf das Gehäuse oder das Objektivteil einwirkt, sondern aufgrund der Konvektion die Temperatur eines peripheren Teils des Objektivs ansteigt und so beispielsweise Feuchtigkeit oder Frost vom Objektiv entfernt werden.

Die DE 10 2010 052 472 A1 beschreibt eine Vorrichtung für eine Kamera eines Kraftfahrzeugs, wobei die Vorrichtung hinter einer Windschutzscheibe des Kraftfahrzeugs angeordnet ist und eine Halteplatte aus einem Kunststoff sowie eine mit der Halteplatte gekoppelten Streulichtblende umfasst. Auf der Streulichtblende ist eine als Heizfolie ausgebildete Heizeinrichtung angeordnet, die durch Kleben, Laminieren oder Besputtern mit der Streulichtblende verbunden sein kann. Die Heizeinrichtung kann über elektrische Anschlüsse mit elektrischer Energie versorgt werden. Dabei wird eine von der Heizeinrichtung erzeugte Wärmestrahlung in Richtung eines Bereichs auf der Windschutzscheibe emittiert, in den eine optische Aufnahmeachse der Kamera gerichtet ist.

Die Aufgabe wird ausgehend vom Oberbegriff des unabhängigen Patentanspruchs 1 durch dessen kennzeichnende Merkmale gelöst. Bevorzugte Ausführungsformen sind Gegenstand der Unteransprüche. Eine Sensoranordnung ist Gegenstand des nebengeordneten Patentanspruchs.

Gemäß einem ersten Aspekt bezieht sich die Erfindung auf ein Temperaturregulierungselement zum Heizen eines Sensors zur Umgebungserfassung bzw. eines Bauelements eines Sensors aufweisend ein dreidimensionales Kunststoffbauteil, wobei in dem Kunststoffbauteil eine metallisierte Struktur integriert ist und die metallisierte Struktur derart ausgebildet ist, dass sie eine Heizfunktion übernimmt. Die Heizfunktion wird dadurch geschaffen, dass die metallisierte Struktur bestromt wird. Die metallisierte Struktur ist mittels Laser-Direkt-Strukturierung hergestellt.

Vorteilhaft hierbei ist, dass hierdurch ein Temperaturregulierungselement geschaffen wird, dass sich auf einfacher Art und Weise grundsätzlich in jeglicher Form und Ausgestaltung herstellen lässt, wodurch es sich an ein temperaturkritisches bzw. ein Temperatur zu regulierendes Bauelement bestmöglichst anpassen lässt und eine ideale Heizleistung geschaffen wird. Das Bauelement bzw. der Sensor kann somit zuverlässig auf seine spezifische Temperatur bzw. auf seine Arbeitstemperatur eingestellt werden, so dass dessen Funktionalität gewährleistet werden kann. Ferner sorgt das erfindungsgemäße Temperaturregulierungselement durch keinerlei feste Formbindung dazu, dass es sich einfach in Bauteile integrieren lässt, da es sich an frei zur Verfügung stehenden Bauraum anpassen lässt. Insgesamt wird so eine Bauraumoptimierung geschaffen.

Wenn hier vorliegend grundsätzlich von (Be-) Heizen gesprochen wird, ist dies dahingehend zu verstehen, dass hierdurch ein Sensor bzw. ein Bauteil aufgeheizt bzw. erwärmt werden kann. Idealerweise wird mit dem Temperaturregulierungselement ein Sensor zur Erfassung der Umgebung eines Kraftfahrzeugs bzw. zumindest ein Bauelement eines Sensors zur Erfassung der Umgebung eines Kraftfahrzeugs beheizt. Damit die Sensoren die Umgebung bestmöglich erfassen können, sind diese häufig an der Außenseite des Kraftfahrzeugs angeordnet und somit den verschiedensten Umwelteinflüssen ausgesetzt. Insbesondere bei Kameras ist eine einwandfreie Sicht wichtig. Hierfür muss sichergestellt werden, dass die Linse nicht beschlägt bzw. beschlagen ist und von Frost befreit wird.

Das Temperaturregulierungselement kann aber auch so ausgebildet sein, dass es sich zum Beheizen von Bauteilen eignet, die in der Umgebung des Sensors angeordnet sind. Insbesondere erfährt das Bauteil durch das Temperaturregulierungselement eine Temperaturänderung. Bei dem Bauteil kann es sich um eine Scheibe, bevorzugt eine Frontscheibe, handeln. Das Temperaturregulierungselement sorgt insbesondere dafür, dass die Scheibe beschlagfrei wird. Vorteilhafterweise ist das Bauteil hierbei in einem Detektionsbereich des Sensors angeordnet. Unter Detektionsbereich wird im Sinne der Erfindung insbesondere ein Bereich verstanden, der bei der Erfassung der Umgebung durch den Sensor aktiv ist. Also insbesondere ein Bereich durch den der Sensor die Umgebung hindurch erfasst. Bei einem Radarsensor ist hierbei insbesondere ein Bereich zu verstehen, durch den der Sensor Signale empfängt bzw. sendet. Bei einer Kamera bzw. einer optischen Vorrichtung ist hierunter insbesondere ein Bereich zu verstehen, der von den, zur Belichtung benötigten elektromagnetischen Strahlen, durchlaufen wird.

Bei dem Kunststoffbauteil kann es sich sowohl um einen Thermoplast, einen Duromer oder auch einen Elastomer handeln. Bevorzugt handelt es sich bei dem Kunststoffbauteil um ein spritzgegossenes Bauteil. Mittels Spritzguss lassen sich dreidimensionale Bauteile in den unterschiedlichsten Formen und Ausgestaltungen einfach und kostengünstig, bei einer sehr guten Qualität bzw. Oberflächenbeschaffenheit realisieren.

Die metallisierte Struktur ist grundsätzlich an keine feste Ausgestaltung gebunden. Wesentlich ist, dass sie so ausgebildet ist, dass sich durch sie eine Heizfunktion ergibt. Sie wird insbesondere an den jeweiligen Anwendungsfall, also grundsätzlich an die benötigte Heizfunktion, angepasst. Dies erfolgt insbesondere durch die Anpassung ihrer Breite, ihres Querschnittes und/oder ihrer Länge sowie der Zusammensetzung der metallischen Beschichtung. Grundsätzlich kann die Heizleistung gesteigert werden indem die metallisierte Struktur vergrößert wird bzw. die Fläche der metallisierten Struktur auf dem Kunststoffbauteil maximiert wird.

Bevorzugt ist die metallisierte Struktur im Wesentlichen linienförmig ausgebildet. Bevorzugt weist die metallisierte Struktur eine Linienbreite von etwa 100 bis 200 µm, insbesondere etwa 150 µm, auf.

Gemäss der Erfindung ist die metallisierte Struktur mäanderförmig ausgebildet bzw. erstreckt sich mäanderförmig, zumindest bereichsweise über das Kunststoffbauteil hinweg. Durch die mäanderförmige Ausgestaltung kann eine besonders lange Leiterbahn erzeugt werden und somit eine gute Heizleistung erreicht werden.

Von Vorteil ist es, wenn sich die metallisierte Struktur im Wesentlichen über das ganze Kunststoffbauteil erstreckt. Bevorzugt erstreckt sich die metallisierte Struktur gleichmäßig über das Kunststoffbauteil. Dies hat den Vorteil, dass eine gleichmäßige Heizleistung geschaffen wird. Es ist aber auch denkbar, dass die metallisierte Struktur nur bereichsweise in dem Kunststoffbauteil integriert ist, also insbesondere in denjenigen Bereichen, die an einen Sensor bzw. einen Teil eines Sensors angrenzen, der einer besonderen Temperaturregulierung bedarf. Ferner kann die im Kunststoffbauteil integrierte metallisierte Struktur in unterschiedlichen Bereichen des Kunststoffbauteils verschiedenartig ausgebildet bzw. ausgeformt sein. Hierdurch können bereichsweise unterschiedliche Heizfunktionen geschaffen werden. Denkbar ist hier beispielsweise, dass die metallisierte Strukturierung eine im Wesentlichen mäanderförmige Ausgestaltung aufweist, sich jedoch die Breiten der metallisierten Struktur in den einzelnen Bereichen zumindest teilweise voneinander unterscheiden bzw. die Abstände zwischen benachbarten Strukturierungen unterscheiden. Beispielsweise liegen in einigen Bereichen benachbarte metallisierte Strukturen sehr nah beieinander, in anderen weiter voneinander weg.

Insbesondere können die Linienbreite und der Abstand zwischen benachbarten metallisierten Bereichen einander im Wesentlichen entsprechen.

Die metallisierte Struktur kann beispielsweise zumindest teilweise aus Kupfer, aus Nickel oder auch aus Gold ausgebildet sein. Die metallisierte Struktur kann auch aus einem Gemisch verschiedener Materialien ausgebildet sein, wodurch sich ein spezifischer Widerstand einstellen lässt, der an die benötigte Heizleistung bzw. Heizfunktion angepasst werden kann. Somit lässt sich in Abhängigkeit der geometrischen Gestaltung auch durch die Auswahl des Materials eine Heizfunktion bzw. Heizleistung einstellen.

Von Vorteil ist es, wenn das Kunststoffbauteil derart ausgebildet ist, dass es auch zur Heizfunktion bzw. Heizleistung mit beitragen kann. Dies kann insbesondere durch die Auswahl eines entsprechenden Kunststoffes bzw. durch die Auswahl von entsprechenden Füll- bzw. Zusatzstoffe, insbesondere mit hoher Wärmeleitfähigkeit, erreicht werden.

Die metallisierte Struktur ist mittels Laser-Direkt-Strukturierung hergestellt. Nachdem das Kunststoffbauteil, das bevorzugt ein Additiv aufweist, hergestellt worden ist, werden diejenigen Bereiche, auf denen die metallisierte Struktur vorgesehen ist, mit einem Laserstrahl belichtet. Durch die Belichtung wird das zugesetzte Additiv aktiviert. Anschließend wird das Bauteil in einem Metallbad, beispielswiese einem Kupferbad, getaucht, wodurch sich die metallisierte Struktur konturenscharf ausbildet. Nacheinander lassen sich so verschiedene Schichten auftragen, wodurch sich eine auf den jeweiligen Verwendungszweck angepasste Struktur herstellen lässt.

Das Temperaturregulierungselement ist als Hohlkörper ausgebildet. Besonders bevorzugt ist das Temperaturregulierungselement im Wesentlichen ringförmig und/oder manschettenförmig ausgebildet. Vorteilhaft hierbei ist, dass durch eine derartige Ausgestaltung, das Temperaturregulierungselement den Temperatur zu regelnden Sensor zumindest bereichsweise umgibt und somit eine sehr gute Temperaturregelung möglich ist.

In einer bevorzugten Ausgestaltung weist das Temperaturregulierungselement zumindest eine Ankoppelstelle bzw. zumindest ein Ankoppelelement zur Verbindung der metallisierten Struktur mit externen Elementen zur Bestromung auf. Besonders bevorzugt weist das Temperaturregulierungselement metallisierte Kontaktflächen auf, die wiederum bestromt werden können, insbesondere mittels Federkontakten.

In einer Ausgestaltung kann das Temperaturregulierungselement als Radom eines Radarsensors ausgebildet sein. Hierdurch werden mehrere Funktionen in einem Bauelement integriert, was sich positiv auf den benötigten Bauraum auswirkt.

Ferner kann das Temperaturregulierungselement auch als Streulichtblende ausgebildet sein.

Gemäß einem zweiten Aspekt bezieht sich die vorliegende Erfindung auf eine Sensoranordnung zur Umgebungserfassung aufweisend einen Sensor zur Umgebungserfassung sowie ein erfindungsgemäßes Temperaturregulierungselement.

Vorteilhaft hierbei ist, dass eine für den Sensor bzw. für ein Bauelement des Sensors optimale Temperierung geschaffen werden kann, wodurch insgesamt eine zuverlässige Arbeitsweise des Sensors gewährleistet werden kann.

Der Sensor wird insbesondere zur Erfassung einer Fahrzeugumgebung eingesetzt und liefert insbesondere Daten bzw. Informationen für Fahrerassistenzsysteme sowie autonom agierende Systeme. Gerade hierbei ist es enorm wichtig, dass der Sensor zuverlässig funktioniert und seine Umgebung richtig erfasst. Der Sensor kann sich aus mehreren Bauelementen zusammensetzen.

Bevorzugt handelt es sich bei dem Sensor um eine optische Vorrichtung, insbesondere ein Linsenmodul oder eine Kamera. Bei der Kamera kann es sich beispielsweise um eine Mono- oder auch eine Stereokamera handeln. Die Kamera kann sowohl als Front-, Seiten- wie auch als Heck- bzw. Rückfahrkamera ausgebildet sein.

Besonders bevorzugt handelt es sich bei der Kamera um eine Kamera eines Surround-View-Systems. Die Kameras von Surround-View-Systemen sind gewöhnlich an der Außenseite eines Kraftfahrzeugs angeordnet und sind somit den unterschiedlichsten Witterungsbedingungen ausgesetzt. Es kann sich aber auch um eine Kamera eines Spiegelersatzsystems handeln.

Bei dem Sensor kann es sich aber auch um einen Radarsensor handeln. Der Radarsensor kann beispielsweise ein Radom und ein Radarsensorelement zum Senden und/oder Empfangen von Signalen umfassen.

In einer bevorzugten Ausgestaltung umgibt das Temperaturregulierungselement den Sensor bzw. ein Bauelement des Sensors zumindest teilweise bzw. deckt den Sensor oder ein Bauelement des Sensors zumindest teilweise ab.

Bevorzugt sind das Temperaturregulierungselement und der Sensor bzw. zumindest ein Bauelement des Sensors, unmittelbar zueinander angeordnet bzw. grenzen unmittelbar aneinander an. Dies ist insbesondere dahingehend zu verstehen, dass sich das Temperaturregulierungselement und der Sensor bzw. das Bauelement des Sensors berühren bzw. kontaktieren. Die Berührung bzw. Kontaktierung liegt insbesondere zumindest im Bereich der metallisierten Struktur des Temperaturregulierungselements vor. Hierdurch lässt sich eine optimale Heizfunktion erreichen.

Gemäss der Erfindung ist das Temperaturregulierungselement als Hohlkörper, insbesondere als Hohlzylinder oder als ringförmiges Element ausgebildet.

Das Temperaturregulierungselement kann hierbei prinzipiell als eine Art Manschette angesehen werden.

In einer bevorzugten Ausgestaltung ist das Temperaturregulierungselement formschlüssig mit dem Sensor bzw. zumindest einem Bauelement des Sensors verbunden.

Möglich ist auch, dass das Temperaturregulierungselement als ein Bauelement des Sensors ausgebildet ist, insbesondere als ein Radom.

In einer bevorzugten Ausgestaltung der Sensoranordnung kann das Temperaturregulierungselement in einem Detektionsbereich des Sensors angeordnet sein.

Grundsätzlich kann das Temperaturregulierungselement zur Beheizung eines Sensors zur Umgebungserfassung eines Kraftfahrzeugs oder zumindest eines Bauelements eines Sensors verwendet werden bzw. zur Beheizung eines anderen Bauteils welches im direkten Detektionsbereichs des Sensors liegt.

Denkbar ist, dass das Temperaturregulierungselement als Streulichtblende verwendet wird. Es ist auch denkbar, dass das Temperaturregulierungselement als Radom Anwendung findet.

Weitere vorteilhafte Ausgestaltungen ergeben sich aus den Zeichnungen. Hierbei zeigen:
- Fig. 1:: eine schematische Darstellung eines Temperaturregulierungselements in einer Ausführungsform in mehreren Ansichten;
- Fig. 2:: eine schematische Darstellung einer metallisierten Struktur in einer Ausführungsform;
- Fig. 3:: eine schematische Darstellung einer Sensoranordnung in einer Ausführungsform;
- Fig. 4:: schematische Darstellung eines Temperaturregulierungselements in einer weiteren Ausführungsform;
- Fig. 5:: schematische Darstellung eines Temperaturregulierungselements in einer noch weiteren Ausführungsform;
- Fig. 6:: eine schematische Darstellung einer Sensoranordnung in einer weiteren Ausführungsform.

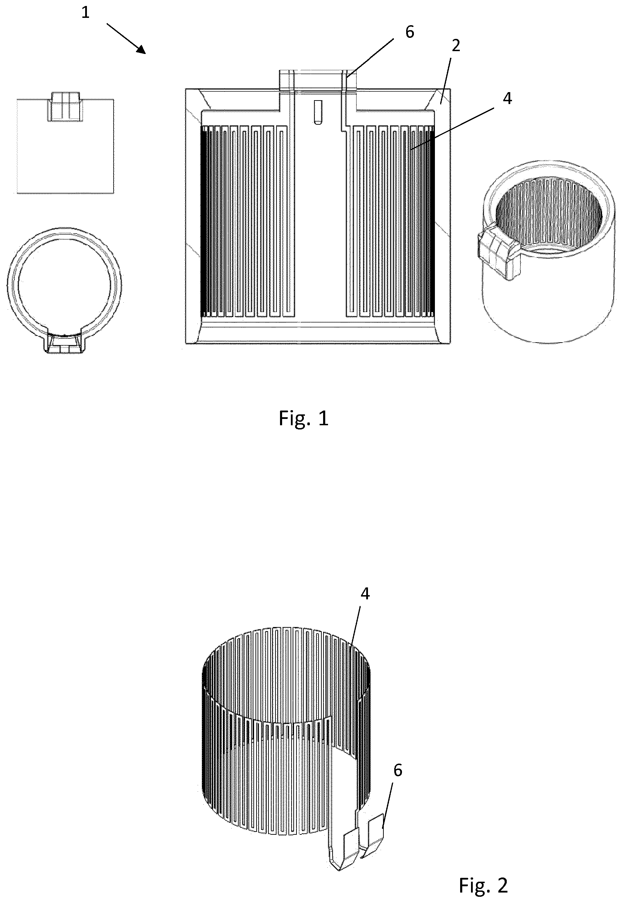

Figur 1 zeigt eine schematische Darstellung eines Temperaturregulierungselements 1 zum Heizen eines Sensors in einer Ausführungsform in mehreren Ansichten, wobei oben links eine Seitenansicht eines Temperaturregulierungselements 1, unten links eine Draufsicht auf ein Temperaturregulierungselement 1, in der Mitte eine Seitenansicht (Schnittdarstellung) eines Temperaturregulierungselements, wobei ein Kunststoffbauteil 2 teilweise weggelassen worden ist, und rechts eine dreidimensionale Ansicht eines Temperaturregulierungselements 1 dargestellt ist.

Das erfindungsgemäße Temperaturregulierungselement 1 umfasst ein dreidimensionales Kunststoffbauteil 2, wobei in dem Kunststoffbauteil 2 zumindest eine metallisierte Struktur 4 integriert ist. Die metallisierte Struktur 4 ist derart ausgebildet, dass sie bestromt werden kann, wodurch sie eine Heizfunktion übernimmt.

Bei dem Kunststoffbauteil 2 handelt es sich bevorzugt um ein Spritzgussbauteil, wobei es sich bei dem Kunststoff sowohl um einen Thermoplast, einen Duromer oder auch einen Elastomer handeln kann.

Die metallisierte Struktur 4 ist mäanderförmig ausgebildet und erstreckt sich im Wesentlichen über das ganze Kunststoffbauteil 2 bzw. über die gesamte Mantelfläche des Kunststoffbauteils 2 hinweg. Lediglich ein geringer Bereich der Mantelfläche des Kunststoffbauteils 2 weist keine metallisierte Struktur 4 auf. Hierdurch kann eine besonders gute Heizleistung erreicht werden.

Die Linienbreite der metallisierten Struktur 4 beträgt bevorzugt etwa 150 µm. Die metallisierte Struktur 4 kann zumindest teilweise aus Kupfer, aus Nickel oder auch aus Gold ausgebildet sein.

Gemäss der Erfindung ist das Temperaturregulierungselement 1 als Hohlkörper ausgebildet. Dies hat den Vorteil, dass es einen Temperatur zu regelnden Sensor umschließt, wodurch eine sehr gute Wärmeübertragung stattfinden kann.

Das in Figur 1 gezeigte Temperaturregulierungselement 1 weist ferner eine Ankoppelstelle 6 zur Verbindung der metallisierten Struktur 4 mit externen Elementen zur Bestromung auf.

Das Temperaturregulierungselement 1 wird bevorzugt zur Beheizung eines Sensors 10 zur Umgebungserfassung eines Kraftfahrzeugs oder eines Bauelements eines Sensors 10 zur Umgebungserfassung verwendet.

Figur 2 zeigt eine schematische Darstellung einer metallisierten Struktur 4 in einer Ausführungsform. Hier ist besonders gut die mäanderförmige Ausgestaltung bzw. gleichmäßiger Verlauf der metallisierten Struktur 4 zu erkennen. Ferner ist auch die Ankoppelstelle 6 dargestellt. Diese ist bevorzugt als Haken- bzw. Clipelement dargestellt. Hierdurch lässt sich eine Verbindung zu externen Elementen besonders gut und sicher herstellen.

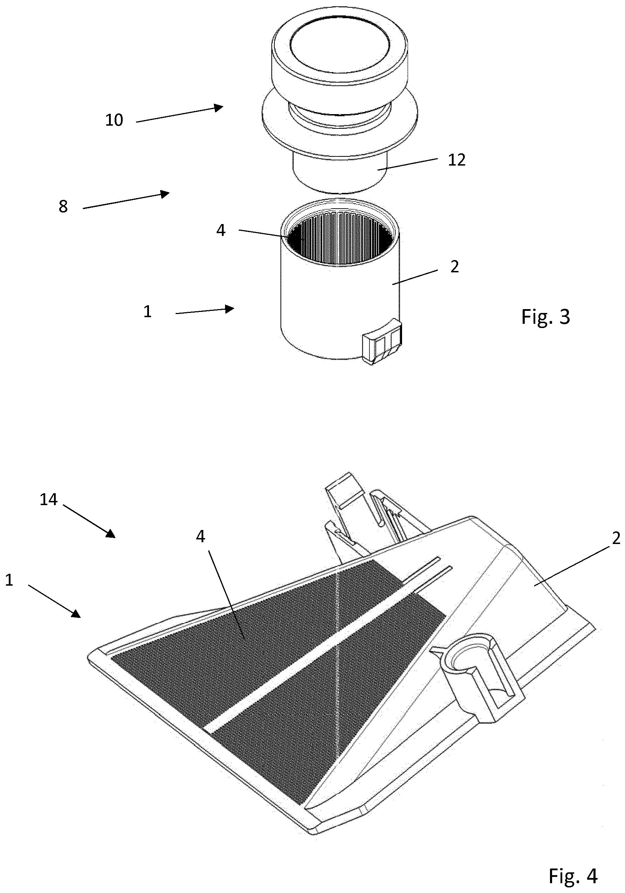

Figur 3 zeigt eine schematische Darstellung einer Sensoranordnung 8 in einer Ausführungsform. Die Sensoranordnung 8 setzt sich aus einem erfindungsgemäßen Temperaturregulierungselement 1 und einem Sensor 10 zusammen. Bei dem in Figur 3 gezeigten Sensor 10 handelt es sich um ein Linsenmodul, welches ein Linsentubus 12 umfasst.

Das Temperaturregulierungselement 1 ist als Hohlkörper ausgebildet und umschließt zumindest einen Teil, insbesondere ein Bauelement des Sensors 10, nämlich den Linsentubus 12. Das Temperaturregulierungselement 1 stellt eine Art Manschette in Bezug auf den Sensor bzw. auf den Linsentubus 12 dar. Das Temperaturregulierungselement 1 und der Sensor 10 grenzen unmittelbar aneinander. Es liegt ein Formschluss vor. Hierdurch kann eine besonders gute Wärmeübertragung sichergestellt werden.

Figur 4 zeigt eine schematische Darstellung eines Temperaturregulierungselements 1 in einer weiteren Ausführungsform, wobei das Temperaturregulierungselement 1 als Streulichtblende 14 ausgebildet ist.

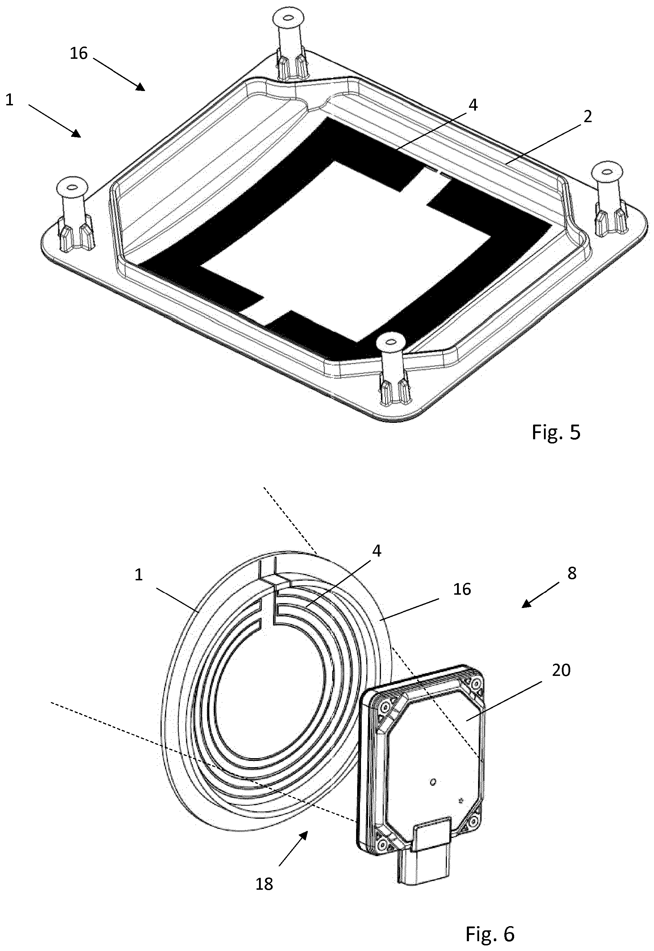

Figur 5 zeigt eine schematische Darstellung eines Temperaturregulierungselements 1 in noch einer weiteren Ausführungsform. Das in Figur 5 dargestellte Temperaturregulierungselement 1 ist als Radom 16 eines Radarsensors ausgebildet.

Figur 6 zeigt eine schematische Darstellung einer Sensoranordnung 8 in einer weiteren Ausführungsform. Die Sensoranordnung 8 umfasst ein Temperaturregulierungselement 1 und einen Radarsensor 18, der zumindest ein Radarsensorelement 20 und ein Radom 16 aufweist. Das Temperaturregulierungselement 1 ist hier Bauteil des Radarsensors 18, nämlich als Radom 16 ausgebildet. In dem Radom 16 sind metallisierte Strukturen 4 ausgebildet.

Ferner ist in der Figur 6 schematisch ein Detektionsbereich dargestellt (s. Bereich zwischen den gestrichelten Linien). Durch diesen Bereich hindurch werden im Wesentlichen Signale vom Radarsensorelement 20 gesendet bzw. empfangen.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird. Auch eine Kombination der verschiedenen Ausführungsbeispiele ist möglich.

### Bezugszeichenliste

- 1: Temperaturregulierungselement
- 2: Kunststoffbauteil
- 4: metallisierte Struktur
- 6: Ankoppelstelle
- 8: Sensoranordnung
- 10: optische Vorrichtung
- 12: Linsentubus
- 14: Streulichtblende
- 16: Radom
- 18: Radarsensor
- 20: Radarsensorelement

## Patentansprüche

1. Temperaturregulierungselement (1) zum Heizen eines Sensors (10) zur Umgebungserfassung bzw. zumindest eines Bauteils eines Sensors (10) zur Umgebungserfassung mit einem dreidimensionalen Kunststoffbauteil (2), wobei in dem Kunststoffbauteil (2) zumindest eine metallisierte Struktur (4) integriert ist, wobei die metallisierte Struktur (4) derart ausgebildet ist, dass sie eine Heizfunktion übernimmt, wobei die Heizfunktion dadurch geschaffen wird, dass die metallisierte Struktur bestromt wird, und wobei die metallisierte Struktur (4) mittels Laser-Direkt-Strukturierung hergestellt is, **dadurch gekennzeichnet, dass** das Temperaturregulierungselement (1) als Hohlkörper ausgebildet ist und dass die metallisierte Struktur (4) mäanderförmig ausgebildet ist und sich im Wesentlichen über das ganze Kunststoffbauteil (2) erstreckt.

2. Temperaturregulierungselement (1) nach einem der vorangehenden Ansprüche **gekennzeichnet durch** eine Ankoppelstelle (6) zur Verbindung der metallisierten Struktur (4) mit externen Elementen zur Bestromung.

3. Temperaturregulierungselement (1) nach einem der vorangehenden Ansprüche, **dadurch gekennzeichnet, dass** das Temperaturregulierungselement (1) als Streulichtblende (14) oder als Radom (16) ausgebildet ist.

4. Sensoranordnung (8) zur Umgebungserfassung aufweisend einen Sensor (10) zur Umgebungserfassung sowie ein Temperaturregulierungselement (1) nach einem der vorangehenden Ansprüche.

5. Sensoranordnung (1) nach Anspruch 4, **dadurch gekennzeichnet, dass** es sich bei dem Sensor (10) um eine optische Vorrichtung, insbesondere eine Kamera, oder einen Radarsensor (18) handelt.

6. Sensoranordnung (8) nach einem der Ansprüche 4 oder 5, **dadurch gekennzeichnet, dass** das Temperaturregulierungselement (1) den Sensor (10) zumindest teilweise umgibt, bevorzugt umschließt.

7. Sensoranordnung (8) nach einem der Ansprüche 4 bis 6, **dadurch gekennzeichnet, dass** das Temperaturregulierungselement (1) und der Sensor (10) unmittelbar aneinander grenzen.

8. Sensoranordnung (8) nach einem der Ansprüche 4 bis 7, **dadurch gekennzeichnet, dass** das Temperaturregulierungselement (1) formschlüssig mit dem Sensor (10) verbunden ist.

9. Sensoranordnung (8) nach einem der Ansprüche 4 bis 8, **dadurch gekennzeichnet, dass** das Temperaturregulierungselement (1) in einem Detektionsbereich des Sensors (10) angeordnet ist.

## Claims

1. A temperature control element (1) for heating a sensor (10) for capturing the environment or for heating at least one component of a sensor (10) for capturing the environment, respectively, having a three-dimensional plastic component (2), wherein at least one metallised structure (4) is integrated in the plastic component (2), wherein the metallised structure (4) is configured such that it assumes a heating function, wherein the heating function is created in that the metallised structure is energised and wherein the metallised structure (4) is produced by means of laser direct structuring, **characterised in that** the temperature control element (1) is configured as a hollow body and **in that** the metallised structure (4) is of meandering form and extends substantially over the entire plastic component (2).

2. The temperature control element (1) as claimed in any one of the preceding claims, **characterised by** a coupling point (6) for connecting the metallised structure (4) to external elements for energisation.

3. The temperature control element (1) as claimed in any one of the preceding claims, **characterised in that** the temperature control element (1) is configured as a lens hood (14) or as a radome (16).

4. A sensor arrangement (8) for capturing the environment, having a sensor (10) for capturing the environment and a temperature control element (1) as claimed in any one of the preceding claims.

5. The sensor arrangement (1) as claimed in claim 4, **characterised in that** the sensor (10) is an optical device, in particular a camera, or a radar sensor (18).

6. The sensor arrangement (8) as claimed in any one of claims 4 and 5, **characterised in that** the
temperature control element (1) at least partially surrounds, preferably encloses, the sensor (10).

7. The sensor arrangement (8) as claimed in any one of claims 4 to 6, **characterised in that** the
temperature control element (1) and the sensor (10) are directly adjacent to one another.

8. The sensor arrangement (8) as claimed in any one of claims 4 to 7, **characterised in that** the
temperature control element (1) is connected to the sensor (10) in a form-fitting manner.

9. The sensor arrangement (8) as claimed in any one of claims 4 to 8, **characterised in that** the
temperature control element (1) is arranged in a detection range of the sensor (10).

## Revendications

1. Élément de régulation de température (1) destiné au chauffage d'un capteur (10) de détection d'environnement ou d'au moins un composant d'un capteur (10) de détection d'environnement comprenant un composant en matière plastique (2) tridimensionnel, dans lequel au moins une structure métallisée (4) est intégrée dans le composant en matière plastique (2), dans lequel la structure métallisée (4) est configurée de sorte qu'elle assure une fonction de chauffage, dans lequel la fonction de chauffage est obtenue en ce que la structure métallisée est alimentée par un courant électrique, et dans lequel la structure métallisée (4) est réalisée au moyen d'une structuration directe par laser, **caractérisé en ce que** l'élément de régulation de température (1) est configuré sous la forme d'un corps creux et **en ce que** la structure métallisée (4) est configurée en forme de méandre et s'étend sensiblement sur l'ensemble du composant en matière plastique (2).

2. Élément de régulation de température (1) selon l'une quelconque des revendications précédentes, **caractérisé par** un point de connexion (6) destiné à la liaison de la structure métallisée (4) avec des éléments externes d'alimentation en courant électrique.

3. Élément de régulation de température (1) selon l'une quelconque des revendications précédentes, **caractérisé en ce que** l'élément de régulation de température (1) est configuré en tant que pare-lumière parasite (14) ou en tant que radôme (16).

4. Ensemble capteur (8) de détection d'environnement, présentant un capteur (10) de détection d'environnement ainsi qu'un élément de régulation de température (1) selon l'une quelconque des revendications précédentes.

5. Ensemble capteur (1) selon la revendication 4, **caractérisé en ce que** le capteur (10) est un dispositif optique, en particulier une caméra, ou un capteur radar (18).

6. Ensemble capteur (8) selon l'une quelconque des revendications 4 ou 5,
**caractérisé en ce que**
l'élément de régulation de température (1) entoure au moins partiellement le capteur (10), de préférence l'enveloppe.

7. Ensemble capteur (8) selon l'une quelconque des revendications 4 à 6,
**caractérisé en ce que**
l'élément de régulation de température (1) et le capteur (10) sont directement adjacents l'un à l'autre.

8. Ensemble capteur (8) selon l'une quelconque des revendications 4 à 7,
**caractérisé en ce que**
l'élément de régulation de température (1) est relié par complémentarité de forme avec le capteur (10).

9. Ensemble capteur (8) selon l'une quelconque des revendications 4 à 8,
**caractérisé en ce que**
l'élément de régulation de température (1) est disposé dans une zone de détection du capteur (10).
